# EUROPEAN PATENT APPLICATION

(11) **EP 1 284 105 A1**
(43) Date of publication of application: **19.02.2003**
(21) Application number: 02078415.3
(22) Date of filing: 14.08.2002
(51) Int. Cl.: A23N 15/00, A01D 45/26

(54) **Method of removing the heart of a cabbage, and apparatus therefor**

(30) Priority: 15.08.2001 NL 1018768
(71) Applicant: J.J. Buis en Zn., 1733 JD Nieuwe Niedorp (NL)
(72) Inventor: Buis, Gerardus Peterus, 1733 JD Nieuwe Niedorp (NL)
(74) Representative: Kupecz, A., Drs. c.s.

(57) **Abstract**

The invention relates to a method of from the root side of a cabbage removing the heart of a cabbage with the aid of cutting means (4) and the removal of heart material severed with the cutting means. According to the invention a cabbage plant is lifted in a known first position which is determined by the root system in an apparatus, is fixed with the aid of gripping means (3), the root system is removed from the cabbage, and the heart is removed from the fixed cabbage.

## Description

The present invention relates to a method of removing the heart of a cabbage, which method comprises the introduction of cutting means and the removal of heart material severed with the cutting means.

Before cabbage can be processed in a factory for the preparation of food products, it is necessary to remove the heart of the cabbage. This is usually done manually or semiautomatically with the aid of a knife, a driven drill cutter or the like, by taking one cabbage whose root system has previously been removed at a time, and removing the heart from the root side of the cabbage.

This is time-consuming, monotonous, labour-intensive manual work.

It is the object of the present invention to provide a method for the automized removal of the heart of a cabbage.

To this end the method according to the invention is characterized in that a cabbage plant comprising a solid cabbage body (the cabbage), a root system and possibly one or several leaves surrounding, and at least partly extending outward from the cabbage body is lifted in a known first position which is determined by the root system in an apparatus, in a second known position the cabbage is fixed with the aid of gripping means gripping the cabbage body, in a third known position the root system is removed from the cabbage and in a fourth known position the heart is removed from the fixed cabbage.

The invention is based on the realization that it is possible to make use of the presence of the root system, including a possible stem, of the cabbage plant to efficiently remove the heart of the cabbage. On the basis of at least part of the root system still being present on harvested cabbage plants they can be aligned by using, for example, two (optionally slanting) parallel rods which are spaced such that the root system can pass between the rods while the solid cabbage body can not. The heart of the cabbage is removed along the centre line, which as in the present manual operation, preferably occurs from the root side of the cabbage.

According to a preferred embodiment the apparatus lifting the cabbage plant is a harvester for harvesting a cabbage plant together with at least part of the root system of the cabbage.

On the land, a cabbage plant is usually in a known, substantially vertical position. By harvesting the cabbage plant such that this position either remains the same, or changes in a known manner, the place on the cabbage from where the heart has to be removed will always be known. A machine for harvesting cabbage is known in the art. In particular the German patent publication DE 42 40 805 A1 describes an apparatus with which a cabbage plant together with (at least part of) the root system is lifted from the field, the root system is cut off and the cabbages are collected. This publication does not describe the cabbage body being fixed prior to (or possibly during) the cutting off of the root system.

Advantageously the second, third and fourth positions are the same.

This simplifies the method as well as the apparatus needed therefor.

The cabbage is fixed preferably with the aid of one, preferably at least two gripping means penetrating into the solid cabbage body.

By using gripping means that penetrate into the cabbage body, optionally in combination with gripping means that do not penetrate the cabbage body, the position of the solid cabbage body is certain. When using two gripping means that penetrate the cabbage body without the presence of gripping means that do not penetrate the cabbage body, the directions of movement of the gripping means in relation to one another should preferably not coincide. Advantageously 3 or 4 gripping means are used.

Preferably at least two gripping means penetrate the cabbage body in radial direction, with at least two gripping means moving at an angle of more than 90° and less than 180° in relation to one another.

These measures increase the certainty of the solid cabbage bodies being maintained in a known position.

Preferably the gripping means are moved toward the heart after the place of the root system near the heart has been ascertained.

That is to say, the place where the root system connects with the cabbage is located by locating the place on the root system closest to the cabbage body. This part is the thickest and firmest making the root system easier to detect. Furthermore, the proximity to the cabbage body thus pinpoints the place of the heart more accurately.

According to an advantageous embodiment, the cabbage is in a second position transported into the machine and the moment of setting the gripping means into motion is determined by the root system being detected.

Moving the cabbage is in particular also advantageous for the continuous processing of cabbages, with the various necessary operations taking place at various successive locations.

The root system may be detected optically. However, the root system is preferably detected with the aid of a thrusting means positioned such that the upper portion of the thrusting means contacts the root system near the heart of the cabbage, and the contact of the thrusting means puts the gripping means into motion.

The thrusting means may very conveniently be a curved plate. By embodying the thrusting means as a plate, it is avoided that the root system catches on the thrusting means. The curve, or thickening of the upper side of the thrusting means contributes to the upper portion of the thrusting means contacting the root system first, near the heart of the cabbage plant. Such a (mechanized) manner of operation has the advantage over direct optical detection methods, since the presence of sand or mud that might soil the light source(s) and photosensitive cell(s) used with optical detection methods, is much less of a problem. Depending on the force necessary to change its position on contact, the thrusting means may optionally be adjusted such that it is still able to penetrate sand/mud before detecting the root system.

According to a practical embodiment, and after the removal of the root system the gripping means move with the cabbage to a section of the harvester comprising the cutting means for the removal of the heart.

Thus the gripping means effectuate the transport of the fixed cabbage to the part of the apparatus where the heart is removed.

It is also advantageous for the cutting means to move in the same direction as the gripping means.

Thus during the transport of the cabbage to a recepticle for (temporary) storage, before the cabbage is processed into a food product, the heart can be removed to facilitate a continuous preparation.

The present invention also relates to an apparatus for the removal of the heart of a cabbage.

To this end the apparatus according to the invention is characterized in that the apparatus
- comprises means for lifting the cabbage in a first known position,
- possesses gripping means for fixing the cabbage in a second known position, and the gripping means are able to fix a cabbage after the root system has been removed from the same,
- possesses means for the removal of the root system, and is provided with cutting means for the removal of the heart.

Preferably the gripping means on the harvester are moveable. The cutting means are preferably also moveable.

Such moveable means contribute to a simplification of the continuous processing of cabbage plants, in order to prepare them for processing into food products.

According to a preferred embodiment the machine is provided in the direction of transport with means chosen from the group consisting of i) means for the temporary storage of the cabbages from which the heart has been removed, and ii) means for the removal of the cabbages from which the heart has been removed.

The present invention will now be explained with reference to the drawing in which
Fig. 1 depicts a machine according to the invention for harvesting cabbage; and
Fig. 2 shows a top view of a detail of the harvester shown in Fig. 1.

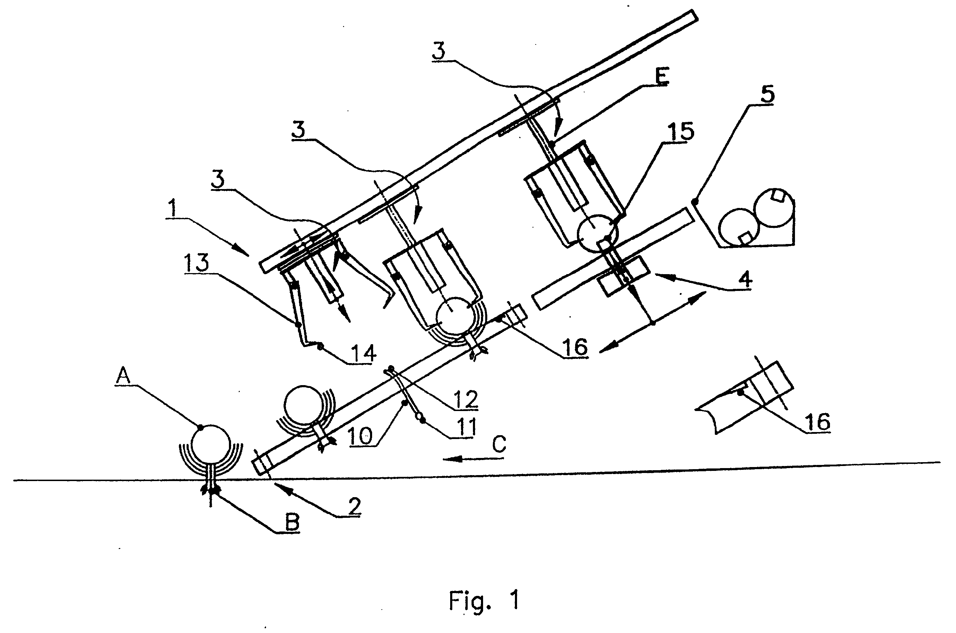

Fig. 1 shows a harvester 1 provided with means 2 for lifting cabbages A from a field, means 3 for gripping a cabbage A, means 4 for the removal of a heart of a cabbage A as well as a receptacle 5 for collecting cabbages A from which the heart has been removed.

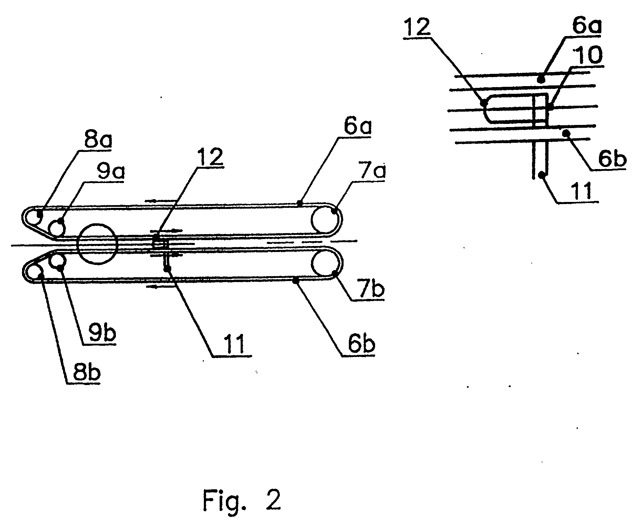

In the embodiments shown, the means 2 comprise two endless belts (Fig. 2) 6a, 6b moving in opposite directions and equipped to grip a cabbage A by its stem B. The endless belts 6 rotate around guide rollers 7, 8, 9. The guide rollers 7 and 8 have a fixed position in relation to one another, while the guide rollers 9a, 9b are preferably pushed toward one another, for example, with the aid of springs (not shown). The means 2 lift a cabbage plant by the stem from the field and move the same in opposition to the direction of movement C of the harvester 1 to the rear side of the harvester 1.

In the embodiment shown a thrust plate 10 is provided, which is rotatable around axis 11. The thrust plate 10 is oriented substantially perpendicularly to the direction in which the cabbages A are transported toward the rear side of the harvester 1. By means of spring elements (not shown) a force is exerted in the direction of the harvesters' movement. The thrust plate 10 is curved so that an upper end 12 is positioned near the heart of cabbages A supplied via the means 2. In this way the upper end 12 will touch the cabbage plant before the rest of the thrust plate 10. The thrust plate 10 or axis 11 is provided with detection means (not shown) to cause the cabbage A to be fixed by the means 3.

In the embodiment shown, the means 3 comprise moveable arms 13, which by a movement in the direction of arrows D can be moved toward one another or away from one another. The arms 13 are provided with tapering points 14, which are able to penetrate into the cabbage A. This fixes the cabbage A in a second position. The means 2 and 3 transport the cabbage A in the direction of the rear side of the harvester 1 passing a knife 16, which cuts off the stem of the cabbage plant (this is shown enlarged in the inset of Fig. 1). Part of the root system, in this case the stem, may remain behind since that can be removed by the subsequent means 4. The cabbage A is moved toward the rear side of the harvester 1 solely by means 3. On the way, the cabbage A passes the means 4 for the removal of the heart from the cabbage A. The means 4 move concurrently with the cabbage A. This is advantageously achieved by having the means 3 take the means 4 along. When the means 3 return (after the delivery of the cabbage A from which the heart has been removed), the means 3 leave the means 4 behind at their starting position. This makes separate driving means unnecessary and avoids synchronisation problems. The means 4 return to the starting position under the influence of gravity, or the means 3 may be provided with, for example, magnets or a releasable snap-on connection. In the embodiment shown, the means 4 comprise a drill 15 moveable in the direction of the cabbage A, which drill 15 is driven and cuts the heart out of the cabbage. According to a favourable embodiment the drill 15 may be static, and the means 3 are moved along axis E in the direction of the drill 15. In this way the drive (not shown) used in the embodiment of the apparatus 1 shown here for moving the means 3 toward the cabbage A can be used more efficiently, so that the apparatus 1 can be cheaper.

The cabbage A from which the heart has been removed is released above the receptacle 5, after which the means 3 can be moved in the direction of movement of the harvester 1 faster than the harvester's rate of movement, for fixing a following cabbage A.

The apparatus according to the invention is suitable, for example, for harvesting white cabbage, red cabbage and savoy cabbage.

It will be obvious to the person skilled in the art that the method according to the present invention can be carried out using various apparatuses without departing from the invention as specified by the appended claims. The apparatus 1 may, for example, be part of an agricultural vehicle, or may be mounted thereon. Obviously several means 2 may be provided parallel to one another, so as to be able to harvest several rows of cabbage plants, while corresponding means 3 and 4 are provided for processing the cabbage plants.

## Claims

1. A method of from the root side of a cabbage removing the heart of a cabbage, which method comprises the introduction of cutting means and the removal of heart material severed with the cutting means, **characterized in that** a cabbage plant comprising a solid cabbage body (the cabbage), a root system and possibly one or several leaves surrounding, and at least partly extending outward from the cabbage body is lifted in a known first position which is determined by the root system in an apparatus, in a second known position the cabbage is fixed with the aid of gripping means gripping the cabbage body, in a third known position the root system is removed from the cabbage and in a fourth known position the heart is removed from the fixed cabbage.

2. A method according to claim 1, **characterized in that** the apparatus lifting the cabbage plant is a harvester for harvesting a cabbage plant together with at least part of the root system of the cabbage.

3. A method according to claims 1 and 2, **characterized in that** the second, third and fourth position are the same.

4. A method according to one of the preceding claims, **characterized in that** fixing occurs with the aid of at least two gripping means penetrating into the solid cabbage body.

5. A method according to claim 4, **characterized in that** at least two gripping means penetrate the cabbage body in radial direction, with at least two gripping means moving at an angle of more than 90° and less than 180° in relation to one another.

6. A method according to claim 4 or 5, **characterized in that** the gripping means are moved toward the heart after the place of the root system near the heart has been ascertained.

7. A method according to claim 6, **characterized in that** the cabbage is in a second position transported into the machine and the moment of setting the gripping means into motion is determined by the root system being detected.

8. A method according to claim 7, **characterized in that** the root system is detected with the aid of a thrusting means positioned such that the upper portion of the thrusting means contacts the root system near the heart of the cabbage, and the contact of the thrusting means puts the gripping means into motion.

9. A method according to one of the preceding claims, **characterized in that** after the removal of the root system the gripping means move with the cabbage to a section of the harvester comprising the cutting means for the removal of the heart.

10. A method according to claim 9, **characterized in that** the cutting means move in the same direction as the gripping means.

11. An apparatus for the removal of the heart of a cabbage, **characterized in that** the apparatus
- comprises means for lifting the cabbage in a first known position,
- possesses gripping means for fixing the cabbage in a second known position, and the gripping means are able to fix a cabbage after the root system has been removed from the same,
- possesses means for the removal of the root system, and
- is provided with cutting means for the removal of the heart.

12. An apparatus according to claim 11 or 12, **characterized in that** the gripping means on the harvester are movable.

13. An apparatus according to claim 11, **characterized in that** the cutting means are movable.

14. An apparatus according to one of the claims 11 to 13, **characterized in that** the machine is a harvester.

15. A method according to claim 14, **characterized in that** the machine is provided in the direction of transport with means chosen from the group consisting of i) means for the temporary storage of the cabbages from which the heart has been removed, and ii) means for the removal of the cabbages from which the heart has been removed.
